# FASCICULE DE BREVET EUROPEEN

(11) **EP 3 718 442 B1**
(45) Date de publication et mention de la délivrance du brevet: **17.11.2021**
(21) Numéro de dépôt: 20167467.8
(22) Date de dépôt: 01.04.2020
(51) Int. Cl.: B29C 45/16

(54) **PROCÉDÉ DE FABRICATION DE VERRE À PIED EN PLASTIQUE**
HERSTELLUNGSVERFAHREN EINES GLASES MIT PLASTIKFUSS
METHOD FOR MANUFACTURING GLASS WITH PLASTIC FOOT

(30) Priorité: 02.04.2019 FR 1903517
(43) Date de publication de la demande: 07.10.2020
(73) Titulaire: JP Grosfilley, 01100 Martignat (FR)
(72) Inventeur: GAUDIN, Philippe, 01100 GROISSIAT (FR)
(74) Mandataire: Germain Maureau

(56) Documents cités:
- KR-U- 20130 006 418
- US-A1- 2004 247 749
- US-A1- 2015 289 692

## Description

### DOMAINE TECHNIQUE DE L'INVENTION

L'invention concerne le domaine technique du moulage plastique. Plus particulièrement, l'invention porte sur la fabrication de verres en plastique avec pied ou base.

### ARRIERE PLAN TECHNOLOGIQUE DE L'INVENTION

En général, on réalise les verres en plastique à pieds ou avec une base par injection soufflage. Cependant, du fait de la forte épaisseur de la tige du pied, supérieure à 5 millimètres, cette technique présente de nombreux inconvénients.

En effet, lors de l'injection, des bulles peuvent apparaitre, ce qui est visuellement très dommageable lors d'injection de pièces transparentes. En outre, avec cette technique, il est difficile de maitriser les états de surface du fait des givrages visibles en surface. Par ailleurs, la géométrie et les dimensions du verre et notamment de la portion de réception, par exemple en forme de ballon, sont difficilement maitrisables du fait du retrait important de la matière moulée. De plus, il est obligatoire de mouler la portion de réception du verre en demi-coquille, ce qui implique un plan de joint vertical visible, inesthétique et gênant pour la tampographie. En outre, le temps de refroidissement de la matière injectée est important du fait de l'épaisseur forte du pied ou de la base, ce qui influence également le coût du moulage.

On connait du document FR2956610 A1, un procédé d'injection-soufflage sur une presse standard. Ce pendant, si l'on fabrique un verre à pied, et si la base ou le pied du verre présente une épaisseur supérieure à 5 millimètres et est moulé en même temps que la préforme de la portion de réception, il est nécessaire d'avoir un temps de refroidissement long pour permettre son démoulage. Or ceci est incompatible avec la nécessité de soufflage de la préforme de la portion de réception dans de bonnes conditions. US 2004/ 247 749, KR 2013 000 6418 et US 2015/ 289 692 divulguent la fabrication d'un verre à pied dans deux étapes individuelles pour la réception de verre et le pied respectivement, suivi d'une étape d'assemblage de la réception de verre avec le pied.

### OBJET DE L'INVENTION

L'invention a pour but de remédier à tout ou partie des inconvénients précités et notamment à permettre la réalisation de verres à pied ou à base de manière simple, rapide est sans défaut visuel sur la portion de réception du verre.

Dans la présente invention, on appelle « portion de réception » la partie supérieure du verre montée sur le pied ou la base et conformée pour contenir un liquide. La portion de réception peut être de forme évasée, tronconique ou conique, ou de forme ballon, par exemple.

À cet effet, l'invention a pour objet un procédé de fabrication d'un verre à pied ou à base en matière plastique, le verre comprenant une portion de réception montée sur une base ou sur un pied, le procédé étant mis en œuvre par un outillage rotatif comprenant une pluralité de postes de travail et au moins un moule caractérisé en ce que le procédé comprend les étapes suivantes :
a) Formation de la portion de réception du verre sur au moins un premier poste de travail dit poste d'injection,
b) Surmoulage du pied ou de la base sur la portion de réception, afin de former un verre à pied ou à base, le surmoulage étant réalisé sur au moins un autre poste de travail dit poste de surmoulage,
c) éjection du verre ainsi formé sur le poste de surmoulage ou sur un autre poste de travail dit poste d'éjection.

Grâce à ce procédé, le temps de cycle est optimisé, notamment par le fait que la portion de réception est réalisée indépendamment du pied, ce qui permet de décomposer le procédé tout permettant la réalisation de plusieurs pièces en même temps. Il est possible de réaliser la portion de réception d'une couleur différente du pied ou de la base dans la mesure où ces deux éléments sont réalisés à part. De plus, le plan de joint vertical sur la portion de réception n'existe plus. En outre, ce procédé permet une liberté dans le dessin du pied ou de la base. On réalise ainsi de manière simple, rapide et économique sur la même presse des pièces complexes, comme un verre disposant d'un pied présentant une épaisseur beaucoup plus importante que le bol, en adaptant des conditions d'injection spécifiques pour chaque injection du bol et du pied. Les qualités de matière, de géométrie et d'état de surface sont préservées pour l'ensemble du contenant, l'esthétique est assurée.

Selon une caractéristique de l'invention, l'étape de formation (a) de la portion de réception est une étape d'injection sur le poste d'injection.

Selon une caractéristique de l'invention, l'étape de formation (a) de la portion de réception comprend les sous-étapes suivantes :
a.1) injection d'une préforme de la portion de réception sur le poste d'injection,
a.2) Soufflage de la préforme injectée en sous-étape (a.1) sur un autre poste de travail dit poste de soufflage.

Selon une caractéristique de l'invention, la préforme de la portion de réception réalisée en sous-étape (a.1) peut comprendre une carotte conformée pour être en prise avec le surmoulage du pied ou de la base.

Selon une caractéristique de l'invention, l'étape de surmoulage (b) est réalisée en une couche sur le poste de surmoulage.

Selon une caractéristique de l'invention, l'étape de surmoulage (b) est réalisée en une pluralité de couches, au moins une couche étant réalisée sur au moins le poste de surmoulage et au moins une deuxième couche étant réalisée sur un autre poste de travail dit poste de surmoulage deuxième couche. Avantageusement, il peut y avoir autant de poste de surmoulage qu'il y a de couches pour former le pied ou la base du verre.

Selon une caractéristique de l'invention, l'étape d'éjection (c) est réalisée moule ouvert ou moule fermé.

Selon une caractéristique de l'invention, le matériau utilisé pour former la portion de réception et/ou le pied est un matériau plastique tel que le polyméthacrylate de méthyle, le plastique Tritan^{®}, le copolymère styrène-acrylonitrile, l'acrylonitrile butadiène styrène, etc.

Selon ce procédé, on applique des conditions d'injection optimum pour l'injection de la portion de réception et l'injection du pied ou de la base car ces derniers sont injectés avec des vis d'injection différentes et sur des postes différents.

Selon une caractéristique de l'invention, le procédé de fabrication selon l'invention est réalisé sur une presse standard, ce qui permet de conserver un outillage classique et peu coûteux.

Selon une caractéristique de l'invention, le procédé comprend une étape supplémentaire (d) de surmoulage d'un matériau élastomère ou autre sur le pied ou la base du verre, ladite étape (d) étant réalisée sur un autre poste de travail, différent des postes d'injection, d'éjection et de surmoulage.

L'invention a également pour objet un verre en plastique doté d'un pied ou d'une base sur lequel est positionné la portion de réception, ledit verre étant obtenu par le procédé de fabrication selon l'invention. Avantageusement, le verre selon l'invention est dépourvu de plan de joint vertical au niveau de la portion de réception.

Selon une caractéristique de l'invention, le verre comprend un pied formé d'une tige et d'une embase, le pied étant positionné sur le fond de la portion de réception du verre.

Selon une caractéristique de l'invention, le verre comprend une base positionnée sous le fond de la portion de réception du verre.

Selon une caractéristique de l'invention, au moins une partie du pied ou de la base est revêtue d'une matière élastomérique.

Selon une caractéristique de l'invention, la portion de réception est un ballon ou une forme cylindrique évasée.

### BREVE DESCRIPTION DES FIGURES

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
[Fig. 1] est une vue schématique d'un outillage avec deux postes de travail pouvant être utilisé pour le procédé de fabrication selon l'invention selon un premier ou un deuxième mode de réalisation,
[Fig. 2] est une vue schématique d'un outillage avec trois postes de travail pouvant être utilisé pour le procédé de fabrication selon l'invention selon un troisième,
[Fig. 3] est une vue schématique d'un outillage avec trois postes de travail pouvant être utilisé pour le procédé de fabrication selon l'invention selon un troisième,
[Fig. 4] est une vue en coupe longitudinale d'un verre à pied selon l'invention réalisé selon un premier mode de réalisation,
[Fig. 5] est une vue en coupe longitudinale d'un verre à pied selon l'invention réalisé selon un deuxième mode de réalisation,
[Fig. 6] est une vue en coupe longitudinale d'un verre à pied selon l'invention réalisé selon un troisième mode de réalisation,
[Fig. 7] est une vue en coupe longitudinale d'un verre à pied selon l'invention réalisé selon un quatrième mode de réalisation,
[Fig. 8] est une vue en coupe longitudinale d'un verre à pied selon l'invention réalisé selon une première variante du premier mode de réalisation,
[Fig. 9] est une vue en coupe longitudinale d'un verre à base selon l'invention réalisé selon une deuxième variante du premier mode de réalisation,
[Fig. 10] est une vue en coupe longitudinale d'un verre à pied selon l'invention réalisé selon une variante du deuxième septième mode de réalisation,
[Fig. 11] est une vue en coupe longitudinale d'un verre à pied selon l'invention réalisé selon une variante du quatrième mode de réalisation,
[Fig. 12] est une vue en coupe longitudinale d'un verre à pied selon l'invention réalisé selon une première variante du troisième mode de réalisation,
[Fig. 13] est une vue en coupe longitudinale d'un verre à pied selon l'invention réalisé selon une deuxième variante du troisième mode de réalisation.

### DESCRIPTION DETAILLEE

Le verre 1 selon l'invention présente une symétrie axiale suivant un axe longitudinal A. Le verre 1 comprend une portion de réception 2 et un pied 4 ou une base 3 positionnés sous la portion de réception 2. Le verre selon l'invention est réalisé dans au moins une matière plastique.

Avantageusement, et quel que soit le mode de réalisation le pied 4 ou la base 3 comprend une collerette supérieure 10 assurant l'adhésion du pied 4 ou de la base 3 sous la portion de réception 2. En outre, quel que soit le mode de réalisation, le pied 4 comprend une tige 6 et une embase 8 préférentiellement circulaire assurant la stabilité du verre 1.

Avantageusement, la portion de réception 2 comporte en partie supérieure un contour sensiblement cylindrique 12, présentant à l'intérieur comme à l'extérieur une forme qui peut être légèrement conique de manière à former des angles de dépouille.

Quel que soit le mode de réalisation, l'outillage 100 comprend au moins un moule de verre et au minimum deux postes de travail : un poste d'injection 101 et un poste de surmoulage 103.

Selon le premier mode de réalisation et le deuxième de réalisation et leurs variantes respectives, l'outillage 100 comprend un poste d'éjection 105.

Selon le troisième mode de réalisation et le deuxième de réalisation et leurs variantes respectives, l'outillage 100 comprend un poste de surmoulage de deuxième couche 104.

Selon l'ensemble des variantes et ce quel que soit le mode de réalisation, l'outillage 100 comprend un poste de soufflage.

Selon l'invention, l'outillage est rotatif, le moule passant d'un poste de travail à un autre en suivant une rotation.

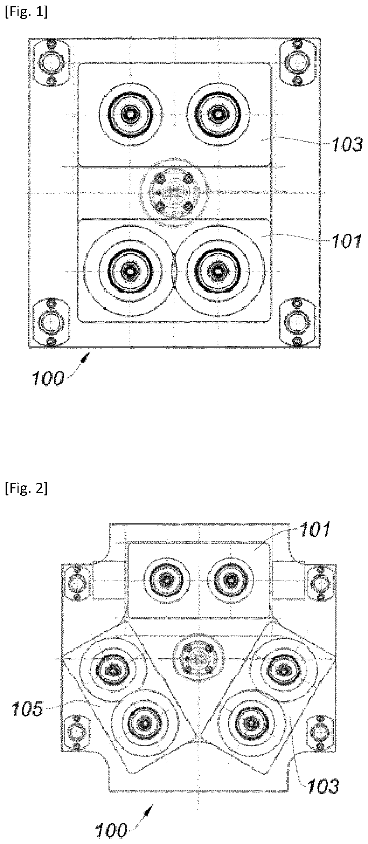

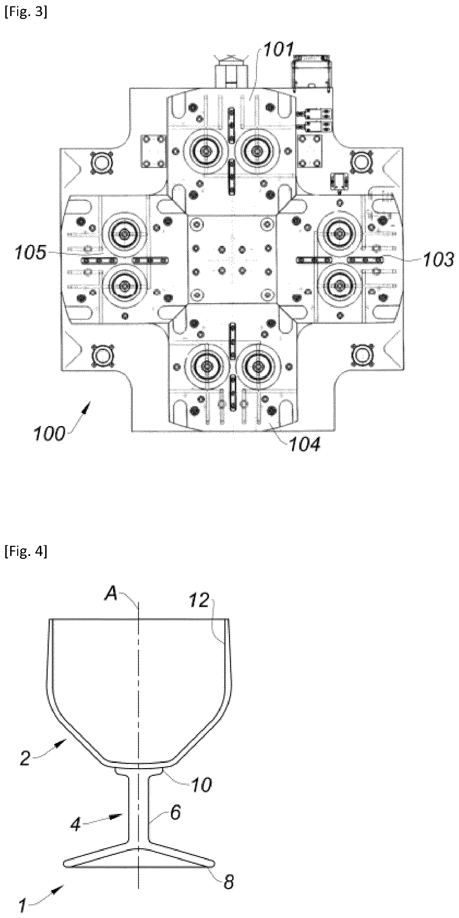

Selon un premier mode de réalisation du verre selon l'invention et selon le procédé de fabrication de l'invention, on injecte sur le poste d'injection 101 la portion de réception 2 du verre 1. Puis on surmoule sur le poste de surmoulage 103 le pied 4 ou la base 3 sur le fond de la portion de réception 2 ainsi formé. Enfin, on éjecte moule fermé le verre 1 sur le poste de surmoulage 103 au niveau duquel le surmoulage a été réalisé ou sur le poste d'éjection 105. Le premier mode de réalisation est illustré en figure 4 et l'outillage utilisé pour ce premier mode de réalisation est illustré aux figures 1 et 2.

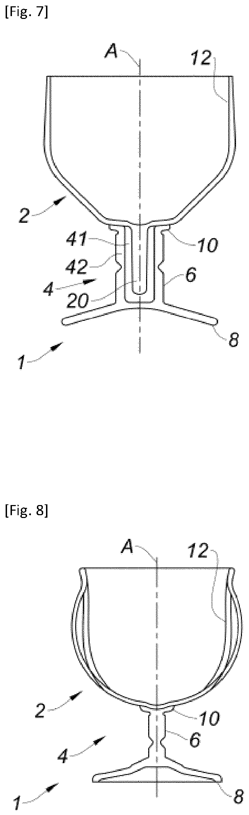

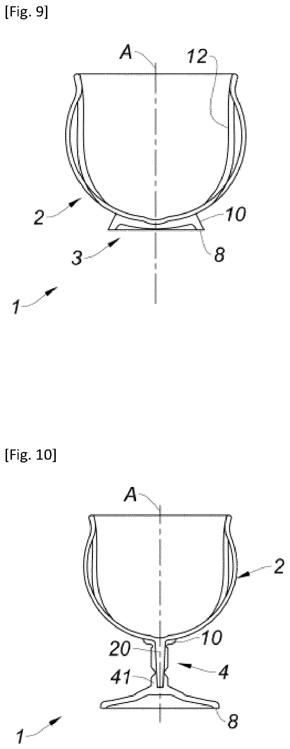

En variante du premier mode de réalisation selon les figures 8 et 9, au lieu d'une injection, on réalise une injection d'une préforme de la portion de réception sur le poste d'injection 101 et un soufflage de ladite préforme sur le poste de soufflage (non représenté).

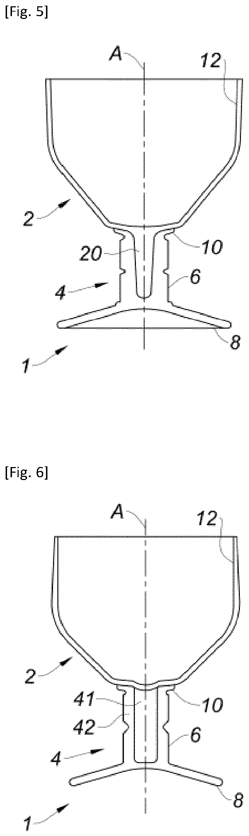

Selon un deuxième mode de réalisation du verre 1 selon l'invention et selon le procédé de fabrication de l'invention, on injecte sur le poste d'injection 101 la portion de réception 2 du verre 1, la portion de réception 2 injectée comprend une carotte 20 longitudinale s'étendant radialement à l'extérieur de la portion de réception 2 depuis le fond de la portion de réception 2, comme illustré en figure 5. Puis on surmoule le pied 4 sur la carotte 20 sur le poste de surmoulage 103. Enfin, on éjecte moule fermé le verre 1 sur le poste de surmoulage 103 au niveau duquel le surmoulage a été réalisé ou sur le poste d'éjection 105. Le deuxième mode de réalisation est illustré en figure 5 et l'outillage utilisé pour ce deuxième mode de réalisation est illustré aux figures 1 et 2.

En variante du deuxième mode de réalisation selon en figure 10, au lieu d'une injection, on réalise une injection d'une préforme de la portion de réception sur le poste d'injection 101 et un soufflage de ladite préforme sur le poste de soufflage (non représenté).

Selon un troisième mode de réalisation du verre 1 selon l'invention et selon le procédé de fabrication de l'invention, on injecte sur le poste d'injection 101 la portion de réception 2 du verre 1. Puis on surmoule une première couche 41 de matière plastique pour former une ébauche de pied 4 sur le poste de surmoulage 103. Ensuite, on surmoule une deuxième couche 42 de matière plastique pour former le pied 4 ou l'embase 3, le deuxième surmoulage étant réalisé sur le premier surmoulage formant l'ébauche de pied. Le surmoulage de la deuxième couche 42 est réalisé sur le poste de surmoulage de deuxième couche 104. Enfin, on éjecte moule fermé le verre 1 sur le poste de surmoulage de deuxième couche 104 au niveau duquel le surmoulage de la deuxième couche 42 a été réalisé ou sur le poste d'éjection 105. Le troisième mode de réalisation est illustré en figure 6 et l'outillage utilisé pour ce troisième mode de réalisation est illustré aux figures 2 et 3.

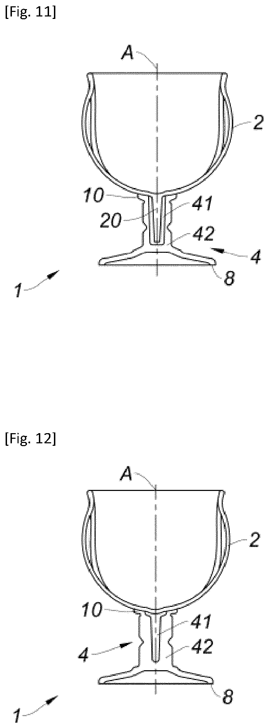

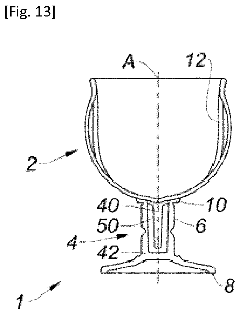

En variante du troisième mode de réalisation selon en figure 12, au lieu d'une injection, on réalise une injection d'une préforme de la portion de réception sur le poste d'injection 101 et un soufflage de ladite préforme sur le poste de soufflage (non représenté). Dans une deuxième variante, il est possible également d'ajouter une troisième couche 43 de matière pour finaliser le pied 4 comme illustré en figure 13. Dans une variante non représentée, il aussi possible d'ajouter une matière élastomérique pour un effet esthétique ou de confort.

Selon un quatrième mode de réalisation du verre 1 selon l'invention et selon le procédé de fabrication de l'invention, on injecte sur le poste d'injection 101 la portion de réception 2 du verre 1, la portion de réception 2 injecté comprend une carotte 20, comme illustré en figure 7. Puis on surmoule une première couche de matière plastique 41 pour former une ébauche de pied 4 sur le poste de surmoulage 103, le surmoulage de la première couche étant réalisé sur la carotte 20. Ensuite, on surmoule une deuxième couche de matière plastique pour former le pied 4, le deuxième surmoulage étant réalisé sur le premier surmoulage formant l'ébauche de pied. Le surmoulage de la deuxième couche 42 est réalisé sur le poste de surmoulage de deuxième couche 104. Enfin, on éjecte moule fermé le verre 1 sur le poste de surmoulage de deuxième couche 104 au niveau duquel le surmoulage de la deuxième couche a été réalisé ou sur le poste d'éjection 105.Le deuxième mode de réalisation est illustré en figure 7 et l'outillage utilisé pour ce quatrième mode de réalisation est illustré aux figures 2 et 3.

En variante du quatrième mode de réalisation selon en figure 11, au lieu d'une injection, on réalise une injection d'une préforme de la portion de réception sur le poste d'injection 101 et un soufflage de ladite préforme sur le poste de soufflage (non représenté).

Enfin, le procédé suivant l'invention pourra comprendre une étape supplémentaire de surmoulage d'un matériau élastomère ou autre sur le pied ou la base du verre, ladite étape étant réalisée sur un autre poste de travail, différent des postes d'injection, d'éjection et de surmoulage.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un verre (1) à pied (4) ou à base (3) en matière plastique, le verre (1) comprenant une portion de réception (2) montée sur une base (3) ou sur un pied (4), le procédé étant mis en œuvre par un outillage rotatif (100) comprenant une pluralité de postes de travail (101, 103, 104, 105) et au moins un moule **caractérisé en ce que** le procédé comprend les étapes suivantes :
a) Formation de la portion de réception (2) du verre (1) sur au moins un premier poste de travail dit poste d'injection (101),
b) Surmoulage du pied (4) ou de la base (3) sur la portion de réception (2), afin de former un verre (1) à pied (4) ou à base (3), le surmoulage étant réalisé sur au moins un autre poste de travail dit poste de surmoulage (103),
c) éjection du verre (1) ainsi formé sur le poste de surmoulage (103) ou sur un autre poste de travail (105) dit poste d'éjection (105).

2. Procédé selon la revendication 1, dans lequel l'étape de formation (a) de la portion de réception est une étape d'injection sur le poste d'injection (101).

3. Procédé selon la revendication 1, dans lequel l'étape de formation (a) de la portion de réception comprend les sous-étapes suivantes :
a.1) injection d'une préforme de la portion de réception sur le poste d'injection (101),
a.2) Soufflage de la préforme injectée en sous-étape (a.1) sur un autre poste de travail dit poste de soufflage.

4. Procédé selon la revendication 3, la préforme de la portion de réception (2) réalisée en sous-étape (a.1) peut comprendre une carotte (20) conformée pour être en prise avec le surmoulage du pied (4) ou de la base (3).

5. Procédé selon l'une quelconque des revendications 1 à 3, dans lequel l'étape de surmoulage (b) est réalisée en une couche sur le poste de surmoulage (103).

6. Procédé selon l'une quelconque des revendications 1 à 3, dans lequel l'étape de surmoulage (b) est réalisée en une pluralité de couches (41, 42, 43), au moins une couche (41) étant réalisée sur au moins le poste de surmoulage (103) et au moins une deuxième couche (42) étant réalisée sur un autre poste de travail dit poste de surmoulage deuxième couche (104).

7. Procédé selon l'une quelconque des revendications 1 à 5, dans lequel l'étape d'éjection (c) est réalisée moule ouvert ou moule fermé.

8. Procédé selon l'une quelconque des revendications 1 à 7, comprenant une étape supplémentaire (d) de surmoulage d'un matériau élastomère ou autre sur le pied (4) ou la base (3) du verre (1), ladite étape (d) étant réalisée sur un autre poste de travail, différent des postes d'injection (101), d'éjection (105) et de surmoulage (103).

9. Verre (1) en plastique doté d'un pied (4) ou d'une base (3) sur lequel est positionnée une portion de réception (2), ledit verre (1) étant obtenu par le procédé de fabrication selon l'une quelconque des revendications précédentes.

10. Verre selon la revendication 9, dans lequel au moins une partie du pied (4) ou de la base (3) est revêtue d'une matière élastomérique.

## Patentansprüche

1. Verfahren zur Herstellung eines Glases (1) mit Fuß (4) oder Sockel (3) aus Kunststoffmaterial, wobei das Glas (1) einen Aufnahmeabschnitt (2) umfasst, der auf einem Sockel (3) oder einem Fuß (4) montiert ist, wobei das Verfahren durch ein Drehwerkzeug (100) umgesetzt wird, das eine Vielzahl von Arbeitsstationen (101, 103, 104, 105) und mindestens eine Form umfasst, **dadurch gekennzeichnet, dass** das Verfahren die folgenden Schritte umfasst:
a) Bilden des Aufnahmeabschnitts (2) des Glases (1) an mindestens einer ersten Arbeitsstation, Einspritzstation (101) genannt,
b) Anformen des Fußes (4) oder des Sockels (3) an den Aufnahmeabschnitt (2), um ein Glas (1) mit Fuß (4) oder mit Sockel (3) zu bilden, wobei das Anformen an mindestens einer anderen Arbeitsstation, Anformstation (103) genannt, ausgeführt wird,
c) Auswerfen des so an der Anformstation (103) oder einer anderen Arbeitsstation (105), Auswurfstation (105) genannt, gebildeten Glases (1).

2. Verfahren nach Anspruch 1, wobei der Schritt des Bildens (a) des Aufnahmeabschnitts ein Einspritzschritt an der Einspritzstation (101) ist.

3. Verfahren nach Anspruch 1, wobei der Schritt des Bildens (a) des Aufnahmeabschnitts die folgenden Teilschritte umfasst:
a.1) Einspritzen einer Vorform des Aufnahmeabschnitts an der Einspritzstation (101),
a.2) Blasen der im Teilschritt (a.1) eingespritzten Vorform an einer anderen, Blasstation genannten, Arbeitsstation.

4. Verfahren nach Anspruch 3, wobei die im Teilschritt (a.1) realisierte Vorform des Aufnahmeabschnitts (2) einen Anguss (20) umfassen kann, der ausgeformt ist, um in Eingriff mit dem Anformen des Fußes (4) oder des Sockels (3) zu sein.

5. Verfahren nach einem der Ansprüche 1 bis 3, wobei der Schritt des Anformens (b) in einer Schicht an der Anformstation (103) realisiert wird.

6. Verfahren nach einem der Ansprüche 1 bis 3, wobei der Schritt des Anformens (b) in einer Vielzahl von Schichten (41, 42, 43) realisiert wird, wobei mindestens eine Schicht (41) an mindestens einer Anformstation (103) realisiert wird, und mindestens eine zweite Schicht (42) an einer anderen Arbeitsstation, Anformstation der zweiten Schicht (104) genannt, realisiert wird.

7. Verfahren nach einem der Ansprüche 1 bis 5, wobei der Schritt des Auswerfens (c) bei offener Form oder geschlossener Form realisiert wird.

8. Verfahren nach einem der Ansprüche 1 bis 7, einen zusätzlichen Schritt (d) des Anformens eines Elastomer- oder anderen Materials an den Fuß (4) oder den Sockel (3) des Glases (1) umfassend, wobei der Schritt (d) an einer anderen Arbeitsstation realisiert wird, die sich von der Einspritz- (101), Auswurf- (105) und Anformstation (103) unterscheidet.

9. Glas (1) aus Kunststoff, das mit einem Fuß (4) oder mit einem Sockel (3) versehen ist, auf dem ein Aufnahmeabschnitt (2) positioniert ist, wobei das Glas (1) durch das Herstellungsverfahren nach einem der vorstehenden Ansprüche erhalten wird.

10. Glas nach Anspruch 9, wobei mindestens ein Teil des Fußes (4) oder des Sockels (3) mit einem Elastomer-Material beschichtet ist.

## Claims

1. A method for manufacturing a glass (1) with a foot (4) or a base (3) in plastic material, the glass (1) comprising a receiving portion (2) mounted on a base (3) or on a foot (4), the method being implemented by a rotary tooling (100) comprising a plurality of workstations (101, 103, 104, 105) and at least one mold **characterized in that** the method comprises the following steps:
a) forming the receiving portion (2) of the glass (1) on at least one first workstation called the injection station (101),
b) overmolding the foot (4) or the base (3) on the receiving portion (2), in order to form a glass (1) with a foot (4) or a base (3), the overmolding being carried out on at least one other workstation called the overmolding station (103),
c) ejection of the glass (1) thus formed on the overmolding station (103) or on another workstation (105) called the ejection station (105).

2. The method according to claim 1, wherein the step of forming (a) the receiving portion is an injection step on the injection station (101).

3. The method according to claim 1, wherein the step of forming (a) the receiving portion comprises the following sub-steps:
a.1) injection of a preform of the receiving portion on the injection station (101),
a.2) blowing of the preform injected at sub-step (a.1) on another workstation called the blowing station.

4. The method according to claim 3, the preform of the receiving portion (2) produced at sub-step (a.1) may comprise a sprue (20) shaped so as to be engaged with the overmolding of the foot (4) or of the base. (3).

5. The method according to any one of claims 1 to 3, wherein the overmolding step (b) is carried out in one layer on the overmolding station (103).

6. The method according to any one of claims 1 to 3, wherein the overmolding step (b) is carried out in a plurality of layers (41, 42, 43), at least one layer (41) being produced on at least the overmolding station (103) and at least one second layer (42) being produced on another workstation called the second layer overmolding station (104).

7. The method according to any one of claims 1 to 5, wherein the ejection step (c) is carried out with an open mold or a closed mold.

8. The method according to any one of claims 1 to 7, comprising an additional step (d) of overmolding an elastomeric material or other on the foot (4) or the base (3) of the glass (1), said step (d) being carried out on another workstation, different from the injection (101), ejection (105) and overmolding (103) stations.

9. A plastic glass (1) provided with a foot (4) or a base (3) on which a receiving portion (2) is positioned, said glass (1) being obtained by the manufacturing method according to any one of the preceding claims.

10. The glass according to claim 9, wherein at least one portion of the foot (4) or the base (3) is coated with an elastomeric material.
